# EUROPÄISCHE PATENTSCHRIFT

(11) **EP 1 038 170 B1**
(45) Veröffentlichungstag und Bekanntmachung des Hinweises auf die Patenterteilung: **02.10.2002**
(21) Anmeldenummer: 98961173.6
(22) Anmeldetag: 11.11.1998
(51) Int. Cl.: G01N 27/22

(54) **VERFAHREN ZUR BESTIMMUNG DES VOLUMETRISCHEN FLÜSSIGWASSERANTEILS UND DER DICHTE VON SCHNEE UND VORRICHTUNG ZUR DURCHFÜHRUNG DES VERFAHRENS**
METHOD FOR DETERMINING THE VOLUMETRIC PROPORTION OF LIQUID WATER AND THE DENSITY OF SNOW, AND DEVICE FOR CARRYING OUT THE METHOD
PROCEDE POUR LA DETERMINATION DE LA TENEUR VOLUMETRIQUE EN EAU LIQUIDE ET DE LA DENSITE DE LA NEIGE ET DISPOSITIF POUR L'EXECUTION DE CE PROCEDE

(30) Priorität: 11.12.1997 DE 19755052
(43) Veröffentlichungstag der Anmeldung: 27.09.2000
(73) Patentinhaber: Forschungszentrum Karlsruhe GmbH, 76133 Karlsruhe (DE)
(72) Erfinder: BRANDELIK, Alexander, D-76227 Karlsruhe (DE); HÜBNER, Christof, D-68535 Edingen-Neckarhausen (DE)
(74) Vertreter: Rückert, Friedrich, Dr.
(86) Internationale Anmeldenummer: EP9807190
(87) Internationale Veröffentlichungsnummer: WO99030140

(56) Entgegenhaltungen:
- EP-A- 0 091 522
- WO-A-96/22522
- FR-A- 2 326 703
- JP-A- 58 018 156
- US-A- 4 389 900
- US-A- 4 766 369
- US-A- 5 398 547

## Beschreibung

Die Erfindung betrifft ein Verfahren zur Bestimmung des volumetrischen Flüsssigwasseranteils und der Dichte von Schnee und eine Vorrichtung zur Durchführung des Verfahrens.

Die Erfassung der Wirkung des globalen Klimawandels auf Eis und Schnee bedarf der Messung des Schneezustandes, insbesondere seiner Dichte und seines Flüssigwassergehalts.

Für die Lawinen- und Überflutungswarnung sind auch diese die wichtigsten Beobachtungsgrößen.

Die Füllerwartung der Speicherbecken von nördlichen Wasserkraftwerken muß aus wirtschaftlichen Gründen weit voraus auch mit Hilfe dieser Parameter bestimmt werden.

M. Schneebeli et al. von dem, Eidg. Institut für Schnee- und Lawinenforschung SLF, Davos/CH, und Meteo France, St.Martin d'Hères / F berichteten in der Veröffentlichung Measurement of Density and Wetnes in Snow Using Time-Domain-Reflectometry unter Druck der Zeitschrift Ann. Glaciol. 26, 1997 über eine mögliche Lösung. Die Arbeit berichtet auch über andere Lösungen mit kurzer, kritischer Würdigung. Ihre Lösung beruht auf Kalibration im Laboratorium. Sie konnten nur die Dichte von Trockenschnee ausreichend gut ermitteln. Wir erinnern daran, daß für die Bestimmung von zwei Unbekannten (Dichte und Feuchte) mindestens zwei unabhängige Informationsquellen (linear unabhängige Meßergebnisse) nötig sind. Da der Schnee ein dreikomponentiges Gemisch ist, braucht man drei Quellen, wobei die dritte durch den Massenerhaltungsatz gegeben ist. Sie haben nur eine Quelle geschöpft, deshalb mußte, wie sie auch berichtet haben, die Messung im feuchten Schnee scheitern.

Der Bericht von Sihvola, A. and Tiuri, M. 1986 Snow fork for field determination of the density and wetness profiles of a snow pack. IEEE Trans. Geosci. Remote Sens. GE 24(5), 717-721. beschreibt eine Schneegabel. Dieses Gerät mißt bei ca. 1 GHz den komplexen (also zwei Quellen) Dielektrizitätskoeffizienten, wodurch die gleichzeitige Bestimmung der Dichte und Schneefeuchte erfolgt. Über einen fortlaufend messenden Einsatz dieses Geräts wurde noch nicht berichtet. Weil der imaginäre Teil des DK bei diesen Frequenzen extrem klein ist, ist die Messung mit sehr großer Unsicherheit behaftet, besonders wenn der Schnee verunreinigt ist. Außerdem mißt das Gerät sehr kleinräumig.

Eine andere Lösung von A.Denoth: The Monopole Antenna: A Practical Snow and Soil Wetness Sensor, in IEEE: Transactions On Geoscience and Remote Sensing. Vol. 35. N0. 5. September 1997 verknüpft (aufgrund empirischer Kenntnis) den DK-Wert mit der Dichte wenn der Schnee trocken ist. Die Dichteentwicklung mit der Zeit wird für eine spätere Zeit extrapoliert und dann als gegeben betrachtet. Mit dieser Dichte und mit dem gemessenen DK-Wert des feuchten Schneegemisches wird dann der Feuchtegehalt ermittelt. Dieses Verfahren ist ungenau, weil die Extrapolation eine bestimmte Schneeentwicklung voraussetzt. Wenn aber in der Zwischenzeit eine Schmelze und ein Wiedererfrieren passierten, wurde diese Erwartung gestört. Die Methode versagt vollständig, wenn die Zeit des trockenen Schnees zu kurz wird, oder gleich feuchter Schnee fällt.

Von den bekannten Lösungen und Geräten kann kein Gerät die fälschende Wirkung des immer vorhandenen Spalts zwischen Instrument und Schnee eliminieren. Auch aus diesem Grund gab es kein Gerät von ausgedehnter oder großflächiger Erfassung.

Aus der US 5 398 547 A sind sind kapazitive Sensoren zur Ermittlung der Vereisung bei Flugzeugen bekannt.

Aus der FR 2 326 703 A ist eine Anordnung von diskreten Kapazitätssensoren bekannt, mit der der Wassergehalt von Schnee punktuell gemessen werden kann.
Des weiteren ist aus der WO 96 22522 A ein flächiger Feuchtesensor mit mindestens zwei sich kreuzenden mehradrigen Leitungen bekannt.

Kein Gerät konnte örtliche Inhomogenitäten entlang eines Weges oder über eine Fläche darstellen.
Aufgabe der Erfindung ist es, ein Verfahren der e. g. Art so auszugestalten, daß Störungen durch das Meßsystem selbst ausgeschlossen werden können und eine Vorrichtung zur Durchführung des Verfahrens bereitzustellen.

Gelöst wird diese Aufgabe durch die Merkmale der Patentansprüche 1 und 5. Die Unteransprüche beschreiben vorteilhafte Ausgestaltungen der Erfindung.

Neu und vorteilhaft sind beim erfindungsgemäßen Verfahren, daß die gesamte Information von dem selben Gerät,und gleichzeitig, d. h. inherent, nur durch eine Frequenzumschaltung gewonnen wird, zerstörungsfrei, und mit Ausschaltung der Wirkung des Spaltes gemessen wird, von einem ausgedehnten Weg, oder von einer größeren Flächen die Daten gewonnen werden, ein Gerät für längere Zeit (Monate) in Betrieb sein kann und örtliche Inhomogenitäten qualitativ dargestellt werden können.
Zur Ermittlung des Dielektrizitätskoeffizienten des Schnees wird vorteilhafter Weise die Zeitbereich-Reflektometrie angewandt, wonach, die mit Hilfe der Rechenmethode der Rekonstruktion von

Leitungsparametern berechneten örtlichen Inhomogenitäten entlang der Sonde und dadurch die Stellen von Eislinsen, Eisbretten und Perkolationsstellen abgelesen werden. Dabei werden elektrische Leiter 1, 2 verwendet, die zum Teil senkrecht oder schräg zur Oberfläche verlaufen, wobei aus dem Reflexionsbild die Schneehöhe ermittelt wird.
Die elektrischen Leiter 1, 2 können kreuzweise, Flächen umfassend, oder schlangenförmig verlegt werden, um eine flächenhafte Erfassung anzunähern.
Als Dielektrizitätsmeßgerät 10 kann ein ein Zeitbereich-Reflektometerverwendet werden, dessen Signallaufzeit mit Hilfe der kapazitiven Sondenparameter mit dem Dielektrizitätskoeffizienten verbunden wird.

Die Erfindung wird im folgenden anhand von Ausführungsbeispielen mit Hilfe der Figuren näher erläutert.

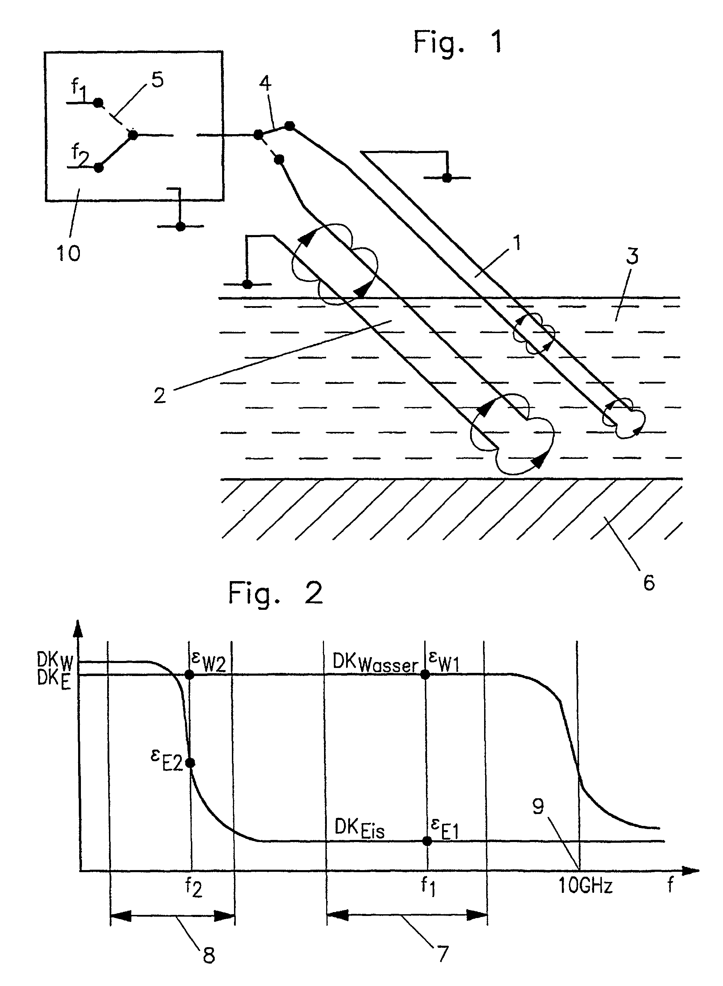

Dabei zeigt die Fig. 1 die schematische Darstellung einer mehradrigen Sonde im Schnee und
die Fig. 2 den frequenzabhängigen DK-Verlauf von Wasser und Eis in Abhängigkeit von der Meßfrequenz.

Die Fig. 3 zeigt einen beispielhaften ortsaufgelösten DK-Verlauf an einigen typischen Inhomogenitäten im Schnee.

Eine ausgedehnte, gleichzeitige und von dem selben Gerät gewonnene, d. h. inherente Messung liefert die Dichte und den Feuchtegehalt.

Der Dielektrizitätskoeffizient DK des Schnees wird entlang eines langen, ungeschirmten, vom Schnee eingeschlossenen Kabelpaars mindestens in zwei Frequenzbereichen gemessen, wobei das Kabel vor dem Schneefall installiert wird. Der erste Bereich wird oberhalb der Relaxationsdispersion des Eis-DK gewählt. Der zweite Bereich wird entweder im Dispersionsbereich, oder darunter bestimmt.

Wesentlich ist nur, daß zwischen den zwei Bereichen ein deutlicher DK-Unterschied von Eis herrschen soll.

Der Schnee ist ein Gemisch aus Eis E, Wasser W und Luft L. Ihre volumetrischen Anteile setzen das einheitliche Meßvolumen zusammen: E + W + L = 1 (Massenerhaltungsatz).

Aus den drei Informationsquellen, der zwei DK-Messungen und dem Massenerhaltungsatz, bestimmt man die drei Unbekannten E, W und L. Aus diesen Zahlen bildet man die Dichte D, D = (E * Eisdichte + W *Wasserdichte ) / (E+W+L) wobei W selbst der gesuchte Feuchtegehalt ist.

### Weitere, vorteilhafte Gestaltungsmerkmale:

Zwischen dem Schnee und einem Meßinstrument ist immer ein gewisser Spalt vorhanden. Dieser, die DK-Messung stark verfälschende Spalt wächst sogar, wenn die Messung für längere Zeit angelegt ist. Um den realen, unverfälschten Wert des Schnee-DK zu bekommen, verwendet man mindestens zwei Kabelpaare, die unterschiedliche Eindringtiefen der messenden elektromagnetischen Felder erzeugen. Vor dem Einsatz werden die Empfindlichkeiten der Kabel bei unterschiedlichen Spalten und in unterschiedlichen Dielektrikum durch Labormessungen oder durch Feldberechnungen ermittelt. Durch zwei Messungen an diesen zwei Kabeln mit unterschiedlichen Eindringtiefen des elektrischen Feldes werden der reale DK und die Breite des Spaltes erfaßt, da ein Spalt bei kleiner Eindringtiefe einen größeren Einfluß auf die DK bewirkt. Wir haben die zwei Kabelpaare in ein dreiadriges Kabel vereinigt. Dadurch wurde ein Sensor gebildet und eine gute Vorausetzung für die inherente Messung geschaffen. Auf dieser Weise kann man eine Meßstation für längere Zeit (Winterperiode) mit guter Meßgenauigkeit trotz einer zunehmenden Breite des Luftspaltes in Betrieb halten.

Die Werte D und W wurden als Mittelwerte entlang einer langen Leitung gebildet. Je länger das Kabel, desto repräsentativer ist der Meßwert für eine größere Fläche. Mit den üblichen Meßinstrumenten können Längen von 40 bis 60 m erfaßt werden.

Wenn die Messung des Schnee-DK mit Hilfe von TDR (Time-Domain-Reflektometer) erfolgte, besteht die Möglichkeit, einer qualitativen Wiedergabe der örtlichen DK-Änderung entlang des Meßkabels. Diese Verteilung gibt weitere, sehr wichtige Informationen über die Homogenität des Schnees entlang des Kabels. Eislinsen, Eisbretten und Perkolationswege können auf diese Weise dargestellt und in die Lawinen- und Überflutungswarnung mit einbezogen werden. Zu dieser Aufgabe verwendet man die in der Fachliteratur bekanntgemachten Rechenalgorithmen der Inversrekonstruktion von Kabelparametern.

Das Meßkabel kann auf verschiedenen Wegen geführt werden. Wir schlagen z.B. eine Ausspannung unter einem kleinen Winkel zur Bodenoberfläche vor. Dadurch kann man sowohl horizontale, als auch vertikale Verteilungen näherungsweise darstellen. Bei mehreren, kreuzweise verlegten Kabeln kann man eine flächenhafte Darstellung annähern. Diese ist besonders für die Kalibrierung von fernerkundeten Daten gefragt.

Die Fig. 1 zeigt zwei Leiterpaare 1, 2 die zum Teil in einer Schneedecke 3 über dem Boden 6 verlaufen. Anstelle der vier Leiter kann ein dreiadriges Kabel verwendet werden, bei dem sich die einzelnen Leiterabstände deutlich unterscheiden. Die Eindringtiefe des Meßfeldes wird durch die Leiterabstände von jeweils 2 Meßleitern bestimmt. Die Abstände der Leiter 1, 2 werden optimal so gewählt, daß die Differenz der Eindringtiefen der zwei Leiterpaare vergleichbar ist mit der Breite der zu erwartenden Luftspalte. Erfahrungsgemäß liegt der Luftspalt zwischen ca.0,5 und 3 mm. Durch einen Umschalter 4 können die Leiterpaare 1, 2 alternierend beschaltet werden. Das DK-Meßgerät 10 kann mit mindestens zwei Frequenzen 5 arbeiten. An den Leitern 1, 2 sind Feldlinien angedeutet, die die unterschiedliche Eindringtiefe des Feldes verdeutlichen.

Die Fig. 2 zeigt in welchen Frequenzbereichen die beiden Meßfrequenzen f1 und f2 gewählt werden. Allgemein reicht es aus, wenn sich bei einer der beiden Frequenzen die DK von Eis oder Wasser unterscheiden. Bei Frequenzen höher als einige GHz sollte nicht gemessen werden, da die Eindringtiefe des Meßfeldes dort zu klein wird. Dies erniedrigt die Empfindlichkeit. Empehlenswert ist eine Frequenz f1, bei der die DK von Wasser maximal und die von Eis minimal (Meßbereich 7) ist und eine Frequenz f2 in der Nähe des Wendepunkts des Eis-DK-Verlaufs (Messbereich 8)

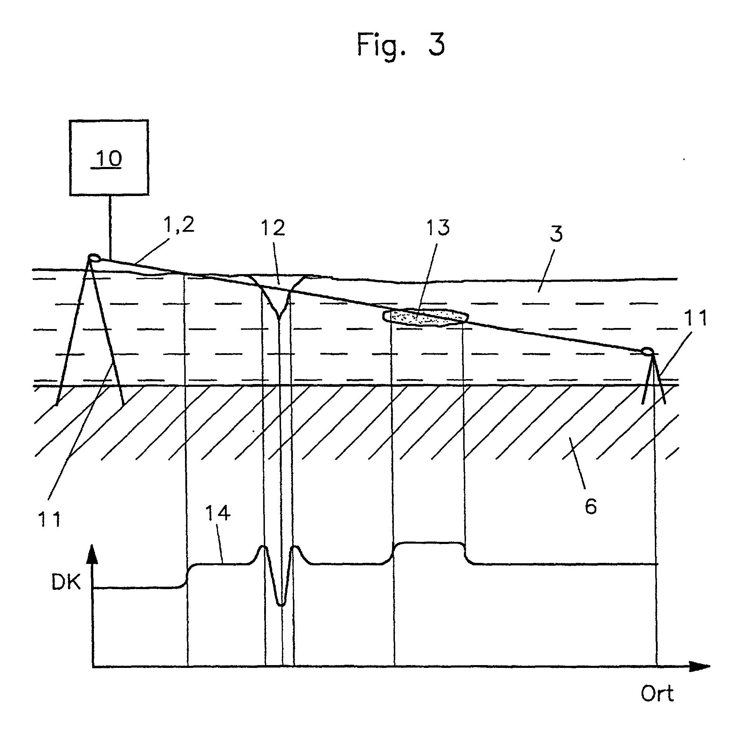

Die Fig. 3 zeigt Leiter 1, 2 die schräg zwischen zwei Verankerungen 11 ausgespannt sind. Die Leiter 1, 2 verlaufen zum Teil in Luft, zum Teil innerhalb der Schneedecke 3. Im unteren Teil der Figur ist der ortsaufgelöste DK -Verlauf 14 des Sensors dagestellt. Dabei sind die Inhomogenitäten bei der Schneedecke 3, wie der Übergang Luft Schnee, Perkolationstrichter 12 und Eislinse 13 deutlich zu erkennen.

## Patentansprüche

1. Verfahren zur Bestimmung des volumetrischen Flüsssigwasseranteils und der Dichte von Schnee mit folgenden Verfahrensschritten:
a) Installieren einer Sonde, welche aus mindestens drei zueinander parallelen elektrischen Leitern (1, 2) mit unterschiedlichen Abständen zueinander besteht, vor dem Schneefall oder Einbringen der Sonde in den bereits gefallenen Schnee (3),
b) Beaufschlagen von zweien der Leiter (1, 2) mit einem elektromagnetische Signal mit einer Frequenz bei der die Dielekrizitätskoeffizienten des Wassers und des Eises bekannt sind und Bestimmen des Dielektrizitätskoeffizienten des Schnees mit einem unvermeidbaren Luftspalt um die Sonde aus dem Übertragungsverhalten des elektromagnetischen Signals,
c) Wiederholung der Dielektrizitätskonstantenbestimmung wobei die Eindringtiefe des Meßfeldes der Sonde abweichend von der ersten Messung ist, durch Wahl eines anderen Leitungsabstandes,
d) Berechnung der realen, durch den Spalt nicht beeinflußten Dielektrizitätskoeffizienten von den zwei Messungen mit Hilfe von sondenspezifisch erstellten Kalibrationsdaten.
e) Wiederholen der Verfahrensschritte b), c) und d) mit einer anderen Meßfrequenz bei der die Dielektrizitätskoeffizienten des Wassers und des Eises bekannt, aber mindestens einer davon einen anderen Wert hat als vorher,
f) Berechnen der volumetrischen Anteile des Schnees wie Wasser, Eis und Luft aus den realen Dielektrizitätskoeffizienten mit Hilfe des Massenerhaltungssatzes.

2. Verfahren nach Anspruch 1, **dadurch gekennzeichnet, daß** zur Ermittlung des Dielektrizitätskoeffizienten des Schnees die Zeitbereich-Reflektometrie angewandt wird, wonach, die mit Hilfe der Rechenmethode der Rekonstruktion von Leitungsparametern berechneten örtlichen Inhomogenitäten entlang der Sonde und dadurch die Stellen von Eislinsen, Eisbretten und Perkolationsstellen abgelesen werden.

3. Verfahren nach Anspruch 1 oder 2, **dadurch gekennzeichnet, daß** elektrische Leiter (1, 2) verwendet werden, die zum Teil senkrecht oder schräg zur Oberfläche verlaufen, wobei aus dem Reflexionsbild die Schneehöhe ermittelt wird.

4. Verfahren nach Anspruch 1 oder 2, **dadurch gekennzeichnet, daß** die elektrischen Leiter (1, 2) kreuzweise, Flächen umfassend, oder schlangenförmig verlegt werden, um eine flächenhafte Erfassung anzunähern.

5. Vorrichtung zur Bestimmung des Flüssigwasseranteils und der Dichte von Schnee mit dielektrischen Messungen, bestehend aus
a) einer von dem Schnee umschlossenen Meßelektrodenanordnung aus mindestens drei zueinander parallelen elektrischen Leitern (1, 2) mit unterschiedlichen Abständen,
b) einem Dielektrizitätsmeßgerät (10) mit mindestens zwei Meßfrequenzen, wobei die Sonde mit dem Dielektrizitätsmeßgerät (10) elektrisch verbunden ist und
c) einem Umschaltelement (4) zum Anschluß verschiedener Leitungspaare (1, 2) zur Einstellung der Eindringtiefe.

6. Vorrichtung nach Anspruch 5, **dadurch gekennzeichnet, daß** die Leiter (1, 2) der Sonde ein langes, flexibiles, ungeschirmtes Flachbandkabel mit dünner Isolation sind,

7. Vorrichtung nach Anspruch 5 oder 6, **dadurch gekennzeichnet daß** das Flachbandkabel ein Dreileiterkabel ist.

8. Vorrichtung nach einem der Ansprüche 5 bis 7, **dadurch gekennzeichnet, daß** die Sonde zwischen Verankerungsgestellen (11) ausgespannt ist.

9. Vorrichtung nach einem der Ansprüche 5 bis 8, **dadurch gekennzeichnet, daß** das Dielektrizitätsmeßgerät (10) ein Zeitbereich-Reflektometer ist, dessen Signallaufzeit mit Hilfe der kapazitiven Sondenparameter mit dem Dielektrizitätskoeffizienten verbunden wird.

10. Vorrichtung nach einem der Ansprüche 5 bis 9, **dadurch gekennzeichnet, daß** eine längere Sonde, unter einem Winkel zur Bodenoberfläche derart ausgespannt wird, daß ein Ende der Sonde höher liegt als die erwartete Schneehöhe.

## Claims

1. Process for determining the volumetric share of liquid water and the density of snow, with these process steps:
(a) Installation, prior to snowfall, of a probe consisting of at least three parallel electric conductors (1, 2) spaced at different distances relative to each other, or introduction of that probe into snow already fallen (3);
(b) exposure of two of the conductors (1, 2) to an electromagnetic signal of a frequency at which the dielectric coefficients of the water and of the ice are known, and determination of the dielectric coefficient of snow, with an unavoidable air gap around the probe, from the transmission characteristics of the electromagnetic signal;
(c) repetition of the determination of the dielectric constant, with the depth of penetration of the measuring field of the probe being different from that in the first measurement, by selecting a different line distance;
(d) calculation of the real dielectric coefficients, uninfluenced by the gap, of the two measurements by means of calibration data established for a specific probe;
(e) repetition of process steps (b), (c), and (d) at a different measuring frequency, at which the dielectric coefficients of the water and the ice are known, but at least one of them is different from what it was before;
(f) calculation of the volumetric shares of snow, such as water, ice, and air, from the real dielectric coefficients by means of the principle of conservation of mass.

2. Process as claimed in claim 1 above, in which time domain reflectometry is used to determine the dielectric coefficient of snow whereby the local inhomogenities as calculated by means of the reconstruction of line parameters and, in this way, the locations of ice lenses, ice slabs, and percolation sites are read off along the probe.

3. Process as claimed in claims 1 or 2 above, in which electric conductors (1, 2) are used which partly extend in a direction normal or at an oblique angle relative to the surface, and where the depth of snow is determined from the reflection image.

4. Process as claimed in claims 1 or 2 above, in which the electric conductors (1, 2) are run crosswise, enclosing areas, or serpentine-fashion in order to approximate coverage of the entire area.

5. Device for determining the share of liquid water and the density of snow by means of dielectric measurements, consisting of
(a) an arrangement of measuring electrodes, enclosed by snow, comprising at least three parallel electric conductors (1, 2) run at different spaces relative to each other;
(b) a dielectricity meter (10) with at least two measuring frequencies, where the probe is electrically connected to the dielectricity meter (10); and
(c) a switching element (4) for connecting various line pairs (1, 2) for setting the depth of penetration.

6. Device as claimed in claim 5 above, in which the conductors (1, 2) of the probe are a long, flexible, unshielded flat ribbon cable with a thin insulation.

7. Device as claimed in claims 5 or 6 above, in which the flat ribbon cable is a three-conductor cable.

8. Device as claimed in any of claims 5 to 7 above, in which the probe is extended between anchoring frames (11).

9. Device as claimed in any of claims 5 to 8 above, in which the dielectricity meter (10) is a time domain reflectometer whose signal transit time is linked to the dielectric coefficient by means of the capacitive probe parameters.

10. Device as claimed in any of claims 5 to 9 above, in which an oblong probe is extended under an angle relative to the ground surface in such a way that one end of the probe is located at a level above the expected snow level.

## Revendications

1. Procédé de détermination de la quantité d'eau liquide par volumétrie et de la densité de la neige avec les étapes de procédé suivantes :
a) installation d'une sonde qui consiste en au moins trois conducteurs électriques parallèles les uns par rapport aux autres (1, 2) avec des intervalles différents les uns par rapport aux autres avant la chute de neige ou bien introduction de la sonde dans la neige qui est déjà tombée (3),
b) mise en contact de deux des conducteurs (1, 2) avec un signal électromagnétique ayant une fréquence à laquelle les coefficients diélectriques de l'eau et de la glace sont connus et détermination du coefficient diélectrique de la neige avec une fente d'aération inévitable autour de la sonde à cause du comportement au transfert du signal électromagnétique,
c) répétition de la détermination de la constante diélectrique dans laquelle la profondeur de pénétration du champ de mesure de la sonde est divergente de la première mesure, par le choix d'un autre intervalle entre conducteurs,
d) calcul des coefficients réels diélectriques non influencés par la fente, par les deux mesures à l'aide de données de calibrage produites d'une manière spécifique à la sonde,
e) répétition des étapes de procédé b), c) et d) avec une autre fréquence de mesure à laquelle les coefficients diélectriques de l'eau et de la glace sont connus mais au moins un de ceux-ci a une autre valeur que précédemment,
f) calcul de la quantité volumétrique de la neige comme eau, glace et air à partir des coefficients diélectriques réels à l'aide du principe de conservation de la masse.

2. Procédé selon la revendication 1,
**caractérisé en ce que**
pour la détermination du coefficient diélectrique de la neige on utilise la réflectométrie de plage de temporisation, permettant d'indiquer les inchomogénéités locales calculées à l'aide de la méthode de calcul de la reconstruction des paramètres de lignes le long de la sonde, et donc les emplacements de lentilles de glace, de plaques de glace et d'emplacement de percolation.

3. Procédé selon la revendication 2,
**caractérisé en ce que**
les conducteurs électriques (1, 2) utilisés s'étendent en partie verticalement ou inclinés par rapport à la surface, et on détermine à partir de l'image de réflexion, la hauteur de neige.

4. Procédé selon la revendication 1 ou la revendication 2,
**caractérisé en ce que**
les conducteurs électriques (1, 2) sont posés en se croisant, comprenant les surfaces ou de forme sinueuse de façon à approcher une couverture plane.

5. Dispositif de détermination de la quantité d'eau et de la densité de la neige avec des mesures diélectriques qui consiste en,
a) une disposition d'électrodes de mesure entourée par la neige à base d'au moins trois conducteurs électriques (1, 2) parallèles les uns par rapport aux autres avec des intervalles différents,
b) un appareil de mesure diélectrique (10) avec au moins deux fréquences de mesure dans lequel la sonde est reliée à l'appareil de mesure diélectrique (10) électriquement, et
c) un élément de commutation (4) pour le raccordement de différentes paires de conduites (1, 2) pour l'ajustement de la profondeur de pénétration.

6. Dispositif selon la revendication 5,
**caractérisé en ce que**
les conducteurs (1, 2) de la sonde forment un câble à bande plane long, flexible et non protégé ayant une isolation mince.

7. Dispositif selon la revendication 5 ou la revendication 6,
**caractérisé en ce que**
le câble à bande plane est un câble à trois conducteurs.

8. Dispositif selon l'une quelconque des revendications 5 à 7,
**caractérisé en ce que**
la sonde est étendue entre des emplacements d'ancrage (11).

9. Dispositif selon l'une quelconque des revendications 5 à 8,
**caractérisé en ce que**
l'appareil de mesure diélectrique (10) est un réflectomètre à plage de temporisation dont la durée de marche du signal est corrélée à l'aide du paramètre de sonde par capacité, au coefficient diélectrique.

10. Dispositif selon l'une quelconque des revendications 5 à 9,
**caractérisé en ce qu'**
une sonde plus longue est étendue sous un angle par rapport à la surface du sol de façon qu'une extrémité de la sonde se situe plus haut que la hauteur de neige escomptée.
